(19) Europäisches Patentamt
European Patent Office
Office européen des brevets

(11) **EP 4 563 426 A1**

(12) **EUROPEAN PATENT APPLICATION**
published in accordance with Art. 153(4) EPC

(43) Date of publication:
**04.06.2025 Bulletin 2025/23**

(21) Application number: **22955213.8**

(22) Date of filing: **15.08.2022**

(51) International Patent Classification (IPC):
***B60W 30/02*** *(2012.01)*

(52) Cooperative Patent Classification (CPC):
**B60W 30/02**

(86) International application number:
**PCT/CN2022/112448**

(87) International publication number:
**WO 2024/036431 (22.02.2024 Gazette 2024/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Shenzhen Yinwang Intelligent
Technologies Co., Ltd.
Shenzhen, Guangdong 518129 (CN)**

(72) Inventors:
• **LIANG, Yixiao
  Shenzhen, Guangdong 518129 (CN)**
• **LIU, Donghao
  Shenzhen, Guangdong 518129 (CN)**
• **YANG, Weimiao
  Shenzhen, Guangdong 518129 (CN)**
• **ZHANG, Yongsheng
  Shenzhen, Guangdong 518129 (CN)**

(74) Representative: **Gill Jennings & Every LLP
The Broadgate Tower
20 Primrose Street
London EC2A 2ES (GB)**

(54) **CONTROL METHOD AND RELATED EQUIPMENT**

(57) A control method is provided, and is applied to a vehicle, a robot, or the like that includes a rotating kit. The rotating kit is configured to implement movement of a device. The method includes: obtaining a first yaw rate (S301), where when abnormal yaw occurs on the device, the first yaw rate is related to an average yaw rate of the device in a first time period, and the first time period is earlier than a moment at which the abnormal yaw occurs; obtaining an actual yaw rate of the device at a first moment (S302), where the first moment is later than an end moment of the first time period; and determining, based on a first difference between the first yaw rate and the actual yaw rate, an adjustment amount for reducing the abnormal yaw (S303). When the abnormal yaw occurs on the device, the adjustment amount is determined based on the average yaw rate of the device in a period of time before the abnormal yaw. The adjustment amount is used to perform intervention on steering of the device, to reduce or suppress the abnormal yaw of the device, and therefore improve traveling safety and stability of the device.

FIG. 3

**Description**

TECHNICAL FIELD

This application relates to the field of safety technologies, and in particular, to a control method and a related device.

BACKGROUND

With development of science and technology, vehicles have become a common means of transportation in people's lives. When an abnormal situation such as sudden acceleration or emergency braking occurs on a vehicle, if adhesion coefficients of wheels on two sides are significantly inconsistent, the vehicle is prone to unexpected yaw movement. In a severe case, fishtailing may even occur on the vehicle. This is prone to a serious road safety accident. In this case, a steering stability intervention technology emerges.

Currently, an idea of the steering stability intervention technology is still to determine, based on real-time rotation of a steering wheel by a driver, a yaw rate expected by the driver, and perform intervention on steering of the vehicle based on a difference between the yaw rate and an actual yaw rate of the wheel. However, it is difficult for most drivers to correctly and stably control the vehicle in an abnormal situation, and the drivers may even have dangerous behaviors such as a sudden turn in panic.

Consequently, there is a great safety risk in performing steering intervention based on a driver operation.

SUMMARY

Embodiments of this application provide a control method and a related device. When unexpected yaw or abnormal yaw occurs on a vehicle, an adjustment amount is determined based on an average yaw rate of the vehicle in a period of time before the abnormal yaw. The adjustment amount is used to perform intervention on steering of the vehicle, to reduce or suppress the abnormal yaw of the vehicle, and therefore improve traveling safety and stability of the vehicle.

According to a first aspect, an embodiment of this application provides a control method. The method may be performed by a control device/terminal device, or may be performed by a component (for example, a processor, a chip, or a chip system) of the control device/terminal device. The control device may be a control element inside the terminal device, or may be an external control device independent of the terminal device. The terminal device may be a movable device such as a vehicle or a robot. The method includes: obtaining a first yaw rate, where when abnormal yaw occurs on a terminal device, the first yaw rate is related to an average yaw rate of the terminal device in a first time period, and the first time period is earlier than a moment at which the abnormal yaw occurs; obtaining an actual yaw rate of the terminal device at a first moment, where the first moment is later than an end moment of the first time period; and determining an adjustment amount based on a first difference between the first yaw rate and the actual yaw rate, where the adjustment amount is used to reduce the abnormal yaw.

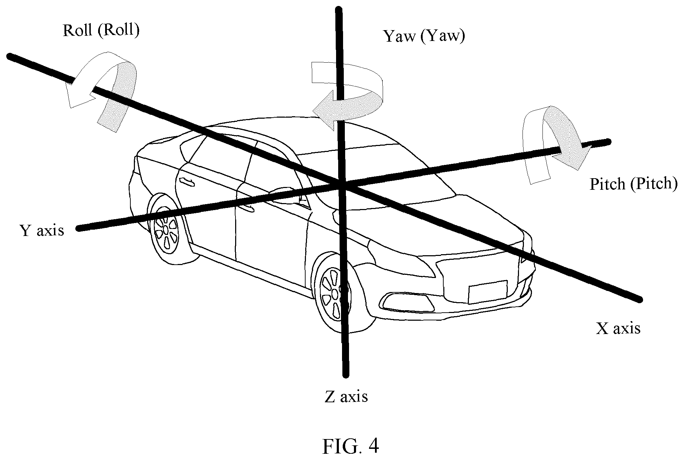

The yaw rate may be understood as an angular velocity of rotation around a Z axis. The Z axis is an axis that is perpendicular to a ground plane on which the terminal device is located (or understood as an up-down axis of the terminal device). This may be described in a subsequent embodiment with reference to FIG. 4. Details are not described herein again.

In this embodiment of this application, when unexpected yaw or the abnormal yaw occurs on the vehicle, the adjustment amount is determined based on the average yaw rate of the vehicle in a period of time before the abnormal yaw. The adjustment amount is used to perform feedback and intervention on steering of the vehicle, to reduce or suppress the abnormal yaw of the vehicle, and therefore improve traveling safety and stability of the vehicle.

Optionally, in a possible implementation of the first aspect, the terminal device further includes a steering component, the steering component is used by an operator to control a moving direction of the terminal device, and when normal yaw occurs on the terminal device, the first yaw rate is related to an operation of the operator on the steering component.

In this possible implementation, the abnormal yaw of the vehicle is usually transient instability. In this case, if intervention is performed on the steering of the vehicle continuously by using an average angular velocity in the period of time after the abnormal yaw occurs on the terminal device, driving experience of the driver is affected. Therefore, after the vehicle is stable, a steering requirement of the driver may be responded without affecting an operation such as steering/lane change for obstacle avoidance performed by the driver.

Optionally, in a possible implementation of the first aspect, the terminal device includes a rotating kit, the rotating kit is configured to implement movement of the terminal device, the rotating kit includes a first rotating component and a second rotating component, and the first rotating component and the second rotating component are coaxial. The method further includes: if a preset condition is met, determining that the abnormal yaw occurs on the terminal device. The preset condition includes one or more of the following: a second difference between first torque and second torque is greater than or equal to a first threshold, where the terminal device further includes a speed control component, the speed control component is used by the operator to control a moving speed of the terminal device, the first torque is determined based on an operation of the operator on the speed control component, and the second torque is actual torque at the rotating kit; and a parameter difference between the first rotating component and the second rotating component is greater than or equal to a second threshold, where the parameter difference includes a slip rate difference and/or a rotation speed difference.

In this possible implementation, a torque difference is introduced as a trigger condition for enabling the steering protection. In other words, the torque difference is used as a condition for active steering activation, especially in a scenario in which a traction control system (Traction Control System, TCS)/an anti-lock brake system (Anti-lock Brake System, ABS) performs intervention. The torque difference and the threshold are used as the condition for enabling the steering protection, so that rationality of an occasion for triggering the steering protection can be improved. In addition, for a vehicle equipped with the TCS/ABS, it is insufficient to detect unexpected yaw only based on the slip rate/wheel speed. A difference that is between driving/brake torque and that is generated by TCS/ABS intervention is introduced as an auxiliary criterion for activation, so that the unexpected yaw can be more accurately determined. In addition, a feedforward control amount is calculated by combining the slip rate/wheel speed and the TCS/AB S. In this way, unexpected yaw movement can be effectively suppressed, and a workload on a feedback loop can be reduced.

Optionally, in a possible implementation of the first aspect, the terminal device is a vehicle, and the rotating kit includes a wheel on one side and a wheel on the other side of the vehicle.

In this possible implementation, the method may be applied to a vehicle steering protection scenario, to improve vehicle driving safety of the driver and the traveling stability of the vehicle.

According to a second aspect, an embodiment of this application provides a control method. The method may be performed by a control device/terminal device, or may be performed by a component (for example, a processor, a chip, or a chip system) of the control device/terminal device. The control device may be a control element inside the terminal device, or may be an external control device independent of the terminal device. The terminal device may be a movable device such as a vehicle or a robot. The method is applied to a terminal device including a rotating kit and a speed control control, the rotating kit is configured to implement movement of the terminal device, and the speed control component is used by an operator to control a moving speed of the terminal device. The method includes: obtaining actual torque of the rotating kit; determining first torque based on an operation of the operator on the speed control component; and if a difference between the actual torque and the first torque is greater than or equal to a first threshold, determining to enable steering protection, where the steering protection is used to reduce abnormal yaw of the terminal device.

In this embodiment of this application, a torque difference is introduced as a trigger condition for enabling the steering protection. In other words, the torque difference is used as a condition for active steering activation, especially in a scenario in which a traction control system (Traction Control System, TCS)/an anti-lock brake system (Anti-lock Brake System, ABS) performs intervention. The torque difference and the threshold are used as the condition for enabling the steering protection, so that rationality of an occasion for triggering the steering protection can be improved. In addition, for a vehicle equipped with the TCS/ABS, it is insufficient to detect unexpected yaw only based on the slip rate/wheel speed. A difference that is between driving/brake torque and that is generated by TCS/ABS intervention is introduced as an auxiliary criterion for activation, so that the unexpected yaw can be more accurately determined. In addition, a feedforward control amount is calculated in a manner of combining the slip rate/wheel speed and the TCS/ABS. In this way, unexpected yaw movement can be effectively suppressed, and a workload on a feedback loop can be reduced.

Optionally, in a possible implementation of the second aspect, the step further includes: determining an adjustment amount based on the difference. The adjustment amount is used to control a yaw status of the terminal device.

In this possible implementation, the adjustment amount is determined based on the difference, so that the yaw status of the terminal device is controlled, to improve movement stability of the terminal device.

Optionally, in a possible implementation of the second aspect, the terminal device is a vehicle, and the rotating kit includes a wheel on one side and a wheel on the other side of the vehicle.

In this possible implementation, the method may be applied to a vehicle steering protection scenario, to improve vehicle driving safety of a driver and the traveling stability of the vehicle.

According to a third aspect, an embodiment of this application provides a control device. The control device includes: an obtaining unit, configured to obtain a first yaw rate, where when abnormal yaw occurs on a terminal device, the first yaw rate is related to an average yaw rate of the terminal device in a first time period, the first time period is earlier than a moment at which the abnormal yaw occurs, the obtaining unit is further configured to obtain an actual yaw rate of the terminal device at a first moment, and the first moment is later than an end moment of the first time period; and a determining unit, configured to determine an adjustment amount based on a first difference between the first yaw rate and the actual yaw rate, where the adjustment amount is used to reduce the abnormal yaw.

Optionally, in a possible implementation of the third aspect, the terminal device further includes a steering component, the steering component is used by an operator to control a moving direction of the terminal device, and when normal yaw occurs on the terminal device, the first yaw rate is related to an operation of the operator on the steering component.

Optionally, in a possible implementation of the third aspect, the terminal device includes a rotating kit, the rotating kit is configured to implement movement of the terminal device, the rotating kit includes a first rotating component and a second rotating component, and the first rotating component and the second rotating component are coaxial. The determining unit is further configured to: if a preset condition is met, determine that the abnormal yaw occurs on the terminal device. The preset condition includes one or more of the following: a second difference between first torque and second torque is greater than or equal to a first threshold, where the terminal device further includes a speed control component, the speed control component is used by the operator to control a moving speed of the terminal device, the first torque is determined based on an operation of the operator on the speed control component, and the second torque is actual torque at the rotating kit; and a parameter difference between the first rotating component and the second rotating component is greater than or equal to a second threshold, where the parameter difference includes a slip rate difference and/or a rotation speed difference.

Optionally, in a possible implementation of the third aspect, the terminal device is a vehicle, and the rotating kit includes a wheel on one side and a wheel on the other side of the vehicle.

According to a fourth aspect, an embodiment of this application provides a control device. The control device includes: an obtaining unit, configured to obtain actual torque of a rotating kit in a terminal device, where the rotating kit is configured to implement movement of the terminal device; and a determining unit, configured to determine first torque based on an operation of an operator on a speed control component in the terminal device, where the speed control component is used by the operator to control a moving speed of the terminal device. The determining unit is configured to: if a difference between the actual torque and the first torque is greater than or equal to a first threshold, determine to enable steering protection, where the steering protection is used to reduce abnormal yaw of the terminal device.

Optionally, in a possible implementation of the fourth aspect, the determining unit is further configured to determine an adjustment amount based on the difference, and the adjustment amount is used to control a yaw status of the terminal device.

Optionally, in a possible implementation of the fourth aspect, the terminal device is a vehicle, and the rotating kit includes a wheel on one side and a wheel on the other side of the vehicle.

According to a fifth aspect, this application provides a vehicle. The vehicle includes the control device according to any one of the third aspect or the possible implementations of the third aspect, or includes the control device according to any one of the fourth aspect or the possible implementations of the fourth aspect.

According to a sixth aspect, this application provides a control device, including a processor. The processor is coupled to a memory, and the memory is configured to store a program or instructions. When the program or the instructions are executed by the processor, the control device is enabled to perform the method according to any one of the first aspect or the possible implementations of the first aspect, or the method according to any one of the second aspect or the possible implementations of the second aspect.

According to a seventh aspect, this application provides a computer-readable medium. The computer-readable medium stores a computer program or instructions. When the computer program or the instructions are run on a computer, the computer is enabled to perform the method according to any one of the first aspect or the possible implementations of the first aspect, or the computer is enabled to perform the method according to any one of the second aspect or the possible implementations of the second aspect.

According to an eighth aspect, this application provides a computer program product. When the computer program product runs on a computer, the computer is enabled to perform the method according to any one of the first aspect or the possible implementations of the first aspect, or the computer is enabled to perform the method according to any one of the second aspect or the possible implementations of the second aspect.

For technical effects brought by any one of the third aspect, the fifth aspect, the sixth aspect, the seventh aspect, the eighth aspect, or the possible implementations thereof, refer to the technical effects brought by the first aspect or different possible implementations of the first aspect. Details are not described herein again.

For technical effects brought by any one of the fourth aspect, the fifth aspect, the sixth aspect, the seventh aspect, the eighth aspect, or the possible implementations thereof, refer to the technical effects brought by the second aspect or different possible implementations of the second aspect. Details are not described herein again.

According to the technical solutions provided in this application, when unexpected yaw or abnormal yaw occurs on a vehicle, an adjustment amount is determined based on an average yaw rate of the vehicle in a period of time before the abnormal yaw. The adjustment amount is used to perform feedback and intervention on steering of the vehicle, to reduce or suppress the abnormal yaw of the vehicle, and therefore improve traveling safety and stability of the vehicle.

## BRIEF DESCRIPTION OF DRAWINGS

FIG. 1 is a diagram of a structure of a vehicle according to an embodiment of this application;

FIG. 2 is a diagram of an application scenario according to an embodiment of this application;

FIG. 3 is a schematic flowchart of a control method according to an embodiment of this application;

FIG. 4 is a diagram of a vehicle coordinate system according to an embodiment of this application;

FIG. 5 is a diagram of an example of a structure of a terminal device according to an embodiment of this application;

FIG. 6 is a diagram of an arbitration procedure according to an embodiment of this application;

FIG. 7 is another schematic flowchart of a data processing method according to an embodiment of this application;

FIG. 8 is a schematic flowchart of decision logic 1 and decision logic 2 according to an embodiment of this application;

FIG. 9 is a diagram of a system architecture according to an embodiment of this application;

FIG. 10 is a diagram of a structure of a control device according to an embodiment of this application;

FIG. 11 is a diagram of another structure of a control device according to an embodiment of this application;

FIG. 12 is a diagram of another structure of a control device according to an embodiment of this application; and

FIG. 13 is a diagram of another structure of a control device according to an embodiment of this application.

## DESCRIPTION OF EMBODIMENTS

Embodiments of this application provide a control method and a related device. When unexpected yaw or abnormal yaw occurs on a vehicle, an adjustment amount is determined based on an average yaw rate of the vehicle in a period of time before the abnormal yaw. The adjustment amount is used to perform feedback and intervention on steering of the vehicle, to reduce or suppress the abnormal yaw of the vehicle, and therefore improve traveling safety and stability of the vehicle.

In embodiments of this application, only an example in which a terminal device is the vehicle is used for description. During actual application, the terminal device may be a movable device such as a two-wheel coaxial carrier device (for example, an electric push cart or a hoverboard) or a robot. The vehicle may be an internal combustion engine vehicle that uses an engine as a power source, a hybrid electric vehicle that uses an engine and an electric motor as a power source, an electric vehicle that uses an electric motor as a power source, or the like. The two-wheel coaxial carrier device may be a device including a rotating kit. The rotating kit is configured to implement movement of the two-wheel coaxial carrier device.

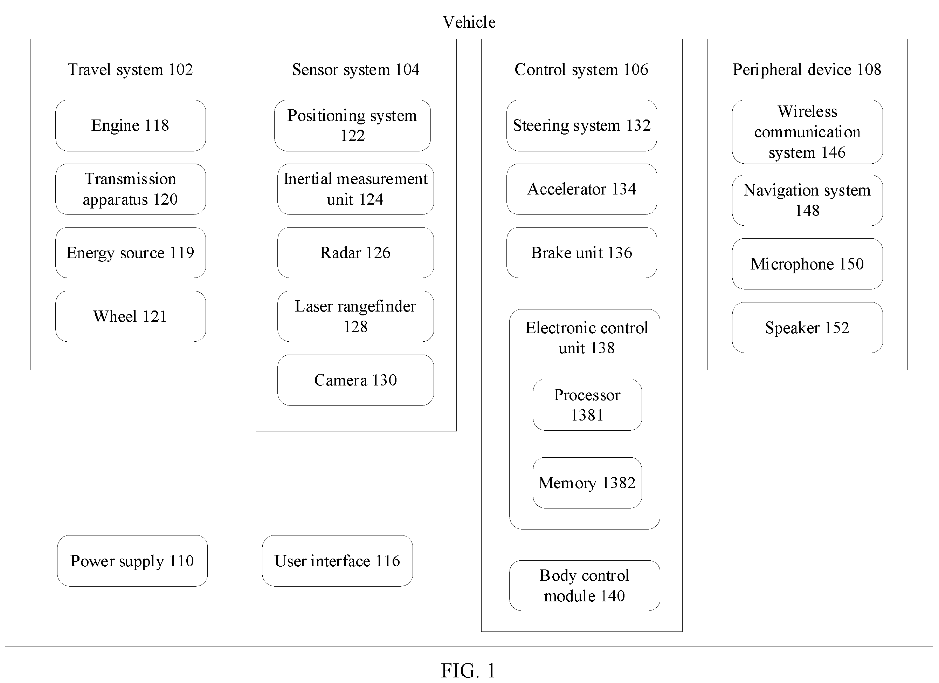

To facilitate understanding of this solution, a structure of the vehicle is first described in an embodiment of this application with reference to FIG. 1. FIG. 1 is a diagram of a structure of a vehicle according to an embodiment of this application. The vehicle may be an example diagram of a terminal device in embodiments of this application.

The vehicle may include various subsystems, such as a travel system 102, a sensor system 104, a control system 106, one or more peripheral devices 108, a power supply 110, and a user interface 116. Optionally, the vehicle may include more or fewer subsystems, and each subsystem may include a plurality of components. In addition, each subsystem and component of the vehicle may be interconnected in a wired or wireless manner (for example, through Bluetooth).

The travel system 102 may include a component that provides power for the vehicle to move. In an embodiment, the travel system 102 may include an engine 118, an energy source 119, a transmission apparatus 120, and a wheel 121.

The engine 118 may be an internal combustion engine, a motor, an air compression engine, or a combination of other types of engines, for example, a hybrid engine including a gasoline engine and a motor, or a hybrid engine including an internal combustion engine and an air compression engine. The engine 118 converts the energy source 119 into mechanical energy. For example, the energy source 119 includes gasoline, diesel, another petroleum-based fuel, propane, another compressed gas-based fuel, ethanol, a solar panel, a battery, and another power source. The energy source 119 may also provide energy for another system of the vehicle. The transmission apparatus 120 may transmit mechanical power from the engine 118 to the wheel 121. The transmission apparatus 120 may include a gearbox, a differential, and a drive shaft. In an embodiment, the transmission apparatus 120 may further include another component, for example, a clutch. The drive shaft may include one or more shafts that can be coupled to the wheel 121.

The sensor system 104 may include several sensors that sense location information of the vehicle. For example, the sensor system 104 may include a positioning system 122 (the positioning system may be a GPS system, a BeiDou system, or another positioning system), an inertial measurement unit (inertial measurement unit, IMU) 124, a radar 126, a laser rangefinder 128, and a camera 130. The sensor system 104 may further include sensors (for example, an in-vehicle air quality monitor, a fuel gauge, and an oil temperature gauge) of an internal system of the monitored vehicle. Sensor data from one or more of these sensors can be used to detect an object and corresponding features (for example, a location, a shape, a direction, and a speed) of the object. Such detection and recognition are key functions of a safe operation of an autonomous vehicle.

The positioning system 122 may be configured to estimate a geographical location of the vehicle, for example, longitude and latitude information of the location of the vehicle. The IMU 124 is configured to sense a location and orientation change of the vehicle based on inertial acceleration. In an embodiment, the IMU 124 may be a combination of an accelerometer and a gyroscope. The radar 126 may sense an object in an ambient environment of the vehicle by using a radio signal, which may be specifically represented as a millimeter-wave radar or a lidar. In some embodiments, in addition to sensing the object, the radar 126 may be further configured to sense a speed and/or a heading direction of the object. The laser rangefinder 128 may sense, through a laser, an object in an environment in which the vehicle is located. In some embodiments, the laser rangefinder 128 may include one or more laser sources, a laser scanner, one or more detectors, and another system component. The camera 130 may be configured to capture a plurality of images of the ambient environment of the vehicle. The camera 130 may be a static camera or a video camera.

The control system 106 controls operations of the vehicle and components thereof. The control system 106 may include various components including a steering system 132, an accelerator 134, a brake unit 136, an electronic control unit (electronic control unit, ECU) 138, and a body control module (body control module, BCM) 140.

The steering system 132 may be operated to adjust a heading direction of the vehicle. For example, in an embodiment, the steering system 132 may be a steering wheel system. The accelerator 134 is configured to control an operating speed of the engine 118 and further control a speed of the vehicle. The brake unit 136 is configured to control the vehicle to decelerate. The brake unit 136 may slow down the wheel 121 by using friction. In another embodiment, the brake unit 136 may convert kinetic energy of the wheel 121 into a current. Alternatively, the brake unit 136 may reduce a rotation speed of the wheel 121 in another manner, to control the speed of the vehicle. The electronic control unit 138 of the vehicle may be implemented as a single ECU or a plurality of ECUs on the vehicle. The single ECU or the plurality of ECUs are configured to communicate with the peripheral device 108 and the sensor system 104. The ECU 138 of the vehicle may include at least one processor 1381 and a memory 1382 (read-only memory, ROM). The at least one processor may be implemented or executed by using one or more general-purpose processors, a content addressable memory, a digital signal processor, an application-specific integrated circuit, a field programmable gate array, any appropriate programmable logic device, a discrete gate or transistor logic, a discrete hardware component, or any combination designed to perform the functions described herein. In particular, the at least one processor may be implemented as one or more microprocessors, controllers, microcontrollers (microcontroller units, MCUs), or state machines. In addition, the at least one processor may be implemented as a combination of computing devices, for example, a digital signal processor or microprocessor, a plurality of microprocessors, one or more microprocessors combined with a digital signal processor core, or any other combination of such configurations. The ROM may provide storage of data, including storage of an address, a route, and a traveling direction in this application.

The BCM 140 may provide information about an engine status, a speed, a gear, a steering wheel angle, and the like of the vehicle to the ECU 138.

The vehicle interacts with an external sensor, another vehicle, another computer system, or a user by using the peripheral device 108. The peripheral device 108 may include a wireless communication system 146, a navigation system 148, a microphone 150, and/or a speaker 152. In some embodiments, the peripheral device 108 provides a means for the user of the vehicle to interact with the user interface 116. For example, the navigation system 148 may be implemented as a part of an in-vehicle entertainment system, an in-vehicle display system, a vehicle-mounted instrument cluster, or the like. In a practical embodiment, the navigation system 148 is implemented to include or cooperate with the sensor system 104. The sensor system 104 derives a current geographical location of the vehicle in real time or basically in real time. The navigation system 148 is configured to provide navigation data for a driver of the vehicle. The navigation data may include location data of the vehicle, suggested route planned traveling indications, and visible map information for a vehicle operator. The navigation system 148 may present the location data to the driver of the vehicle through a display element or another display device. A current location of the vehicle may be described by using one or more of the following information: a triangulation location, a latitude/longitude location, x and y coordinates, or any other symbol indicating the geographical location of the vehicle or any measurement method.

The user interface 116 may further operate the navigation system 148 to receive user input. The navigation system 148 may be operated through a touchscreen. The navigation system 148 provides route planning and navigation capabilities when the user enters geographical location values of start and end points. In another case, the peripheral device 108 may provide a means for the vehicle to communicate with another device located in the vehicle. For example, the microphone 150 may receive audio (for example, a voice command or other audio input) from the user of the vehicle. Similarly, the speaker 152 may output audio to the user of the vehicle. The wireless communication system 146 may communicate with one or more devices in a wireless manner directly or through a communication network. For example, the wireless communication system 146 may use 3G cellular communication such as code division multiple access (code division multiple access, CDMA), EVD0, or global system for mobile communications (global system for mobile communications, GSM)/general packet radio service (general packet radio service, GPRS), 4G cellular communication such as long term evolution (long term evolution, LTE), or 5G cellular communication. The wireless communication system 146 may communicate with a wireless local area network (wireless local area network, WLAN) through Wi-Fi. In some embodiments, the wireless communication system 146 may directly communicate with a device through an infrared link, Bluetooth, or ZigBee. Other wireless protocols such as various vehicle communication systems may be used. For example, the wireless communication system 146 may include one or more dedicated short-range communications (dedicated short-range communications, DSRC) devices. These devices may include public and/or private data communication between vehicles and/or between roadside stations.

The power supply 110 may supply power to various components of the vehicle. In an embodiment, the power supply 110 may be a rechargeable lithium-ion or lead-acid battery. One or more battery strings of the battery may be configured as a power supply to supply power to various components of the vehicle. In some embodiments, the power supply 110 and the energy source 119 may be implemented together, as in some pure electric vehicles.

Optionally, one or more of the foregoing components may be installed separately from or associated with the vehicle. For example, the memory 1382 may be partially or completely separated from the vehicle. The foregoing components may be communicatively coupled together in a wired and/or wireless manner.

Optionally, the foregoing components are merely examples. During actual application, components in the foregoing modules may be added or removed according to an actual requirement. FIG. 1 should not be construed as a limitation on embodiments of this application.

The vehicle may be a car, a truck, a motorcycle, a bus, a boat, a lawn mower, a recreational vehicle, a playground vehicle, a construction device, a trolley, a golf cart, a handcart, or the like. This is not specifically limited in embodiments of this application.

The foregoing describes a diagram of a system architecture applicable to embodiments of this application with reference to FIG. 1. To better understand technical solutions provided in embodiments of this application, the following specifically describes a research idea of the technical solutions described in this application.

When the control system is introduced with reference to FIG. 1, it is mentioned that the steering system may be operated to adjust the heading direction of the vehicle. For example, in an embodiment, the steering system may be the steering wheel system. When abnormal yaw occurs on the vehicle, the driver may determine, based on real-time rotation of a steering wheel, a yaw rate expected by the driver. However, it is difficult for most drivers to correctly and stably control the vehicle in an abnormal situation, and the drivers may even have dangerous behaviors such as a sudden turn in panic.

For the foregoing problems, this application provides a control method. When the abnormal yaw occurs on the vehicle, an adjustment amount is determined based on an average yaw rate of the vehicle in a period of time before the abnormal yaw. The adjustment amount is used to perform feedback and intervention on steering of the vehicle, to reduce or suppress the abnormal yaw of the vehicle, and therefore improve traveling safety and stability of the vehicle.

Based on the foregoing research idea, the following specifically describes the technical solutions provided in this application.

First, an application scenario applicable to embodiments of this application is described by using examples.

1. Mu-jump road surface scenario

This scenario may be understood as that adhesion coefficients of road surfaces on two sides of wheels of the vehicle are different. When the vehicle travels on a mu-jump road surface, the adhesion coefficients of the road surfaces on the two sides of wheels are different. Especially in emergency acceleration and deceleration, the vehicle may generate unexpected yaw movement. If the driver performs wrong operation due to lack of experience or panic, the vehicle may be completely unstable, or another serious consequence may occur.

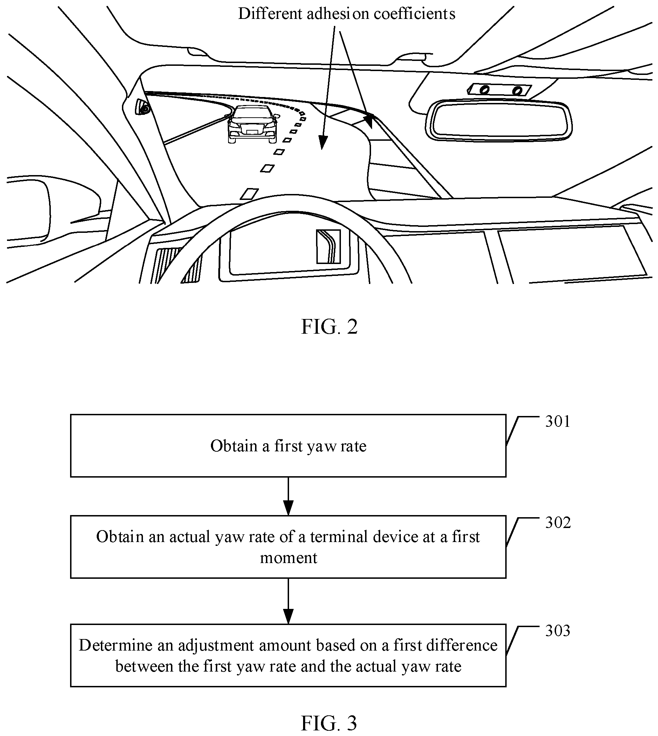

For example, the scenario may be shown in FIG. 2. Adhesion coefficients of road surfaces on which a right wheel and a left wheel of the vehicle are located are different.

2. Other scenarios

The other scenarios may be scenarios such as a scenario in which a difference between torque of the left and right wheels is large due to another reason on the road surface.

It may be understood that the foregoing several scenarios are merely examples. During actual application, there may be another applicable scenario (for example, a scenario caused by a traffic accident). This is not specifically limited herein.

FIG. 3 is a schematic flowchart of a control method according to an embodiment of this application. The method may be performed by a control device/terminal device, or may be performed by a component (for example, a processor, a chip, or a chip system) of the control device/terminal device. The control device may be a control element inside the terminal device (for example, the control system or the sensor system in the vehicle in FIG. 1), or may be an external control device independent of the terminal device. The terminal device may be a movable device such as a vehicle or a robot. The method may include step 301 to step 303. The following describes step 301 to step 303 in detail by using an example in which the method is performed by the control device.

301: Obtain a first yaw rate.

The control device obtains the first yaw rate. When abnormal yaw occurs on the terminal device, the first yaw rate is related to an average yaw rate of the terminal device in a first time period. The first time period is earlier than a moment at which the abnormal yaw occurs.

Specifically, the first yaw rate is the average yaw rate of the terminal device in the first time period. This step may also be understood as that an average yaw rate of the vehicle in a period of time before the abnormal yaw is used as an expected yaw rate.

To facilitate understanding of a yaw rate, a vehicle coordinate system is described with reference to FIG. 4 by using an example in which the terminal device is a vehicle. The coordinate system includes an X axis, a Y axis, and a Z axis. The Y axis is a lateral symmetry axis of the vehicle (or understood as a front-back axis of the vehicle), the X axis is an axis that is on a ground plane on which the vehicle is located and that is perpendicular to the Y axis (or understood as a left-right axis of the vehicle), and the Z axis is an axis that is perpendicular to the ground plane on which the vehicle is located (or understood as an up-down axis of the vehicle). The yaw (Yaw) rate is rotation of the vehicle around a vertical axis (namely, the Z axis). A magnitude of the rotation indicates a degree of stability of the vehicle. A pitch (Pitch) rate is rotation of the vehicle around the Y axis. Roll (Roll) is rotation of the vehicle around the X axis.

The abnormal yaw in embodiments of this application is unexpected yaw that occurs on the terminal device. For a case in which the terminal device is a vehicle, the abnormal yaw may be mainly caused by different adhesion coefficients of ground surfaces on which wheels on two sides of the vehicle are located. A decision condition for the abnormal yaw may be decision logic 1 or decision logic 2 described below. In other words, if the decision logic 1 and/or the decision logic 2 are/is satisfied, it is determined that the abnormal yaw occurs on the terminal device.

The terminal device in embodiments of this application may be a device with a steering function during movement, for example, a vehicle (for example, a new energy vehicle or an intelligent vehicle) or a robot. A rotating kit is configured to implement movement of the terminal device. The rotating kit includes a first rotating component and a second rotating component, and the first rotating component and the second rotating component are coaxial.

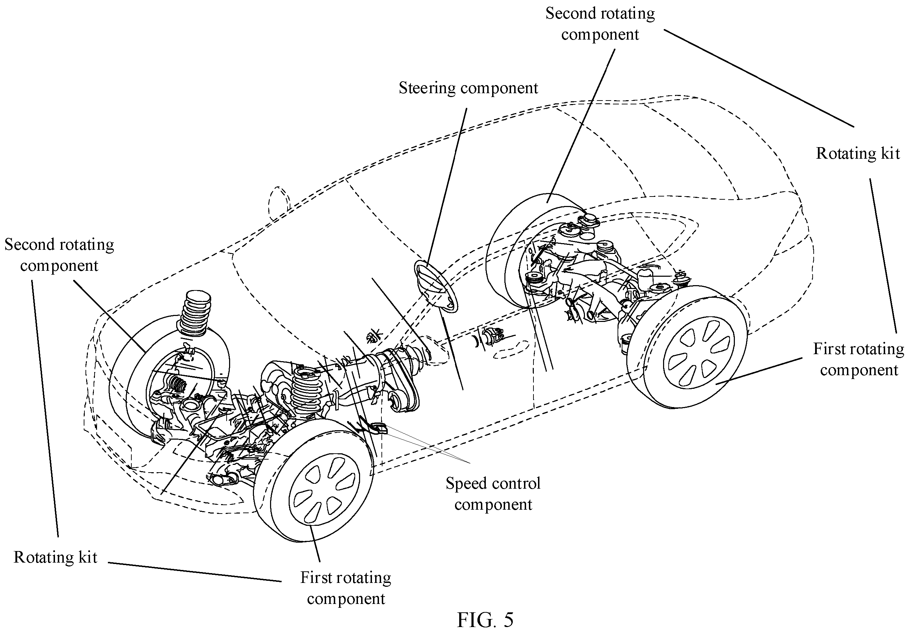

For example, for ease of subsequent understanding, only an example in which the terminal device is a four-wheel vehicle is used in the following descriptions. Each component or kit of the vehicle may be shown in FIG. 5. In other words, the first rotating component is wheels on one side of the vehicle, and the second rotating component is wheels on the other side of the vehicle. In FIG. 5, only an example in which the first rotating component is left wheels of the vehicle and the second rotating component is right wheels of the vehicle is used. It may be understood that the first rotating component and the second rotating component in FIG. 5 are relative concepts. For example, the first rotating component may alternatively be the right wheels of the vehicle, and the second rotating component may alternatively be the left wheels of the vehicle. A steering component is used by an operator (or referred to as a driver) to control a moving direction of the vehicle. Specifically, the steering component may be a steering wheel of the vehicle in the example of FIG. 5. A speed control component is used by the operator (or the driver) to control a moving speed of the terminal device. Specifically, the speed control component may include an accelerator pedal and a brake pedal in the example of FIG. 5.

Step 302: Obtain an actual yaw rate of the terminal device at a first moment.

The control device may further obtain the actual yaw rate of the terminal device at the first moment. The first moment is later than an end moment of the first time period.

In this embodiment of this application, the actual yaw rate may be obtained in a plurality of manners. The actual yaw rate may be directly obtained through a yaw rate sensor installed on the vehicle, or may be indirectly obtained based on a wheel speed, the steering wheel, or the like. This is not specifically limited herein.

Step 303: Determine an adjustment amount based on a first difference between the first yaw rate and the actual yaw rate.

After obtaining the first yaw rate and the actual yaw rate, the control device may obtain the first difference between the first yaw rate and the actual yaw rate, and may determine the adjustment amount based on the first difference. The adjustment amount is used to reduce the abnormal yaw.

The difference in this embodiment of this application may be an absolute difference, or may be a signed difference. This is not specifically limited herein.

Specifically, the first difference is input into a proportional-integral-derivative (Proportional Integrating Differentiation, PID) controller to calculate the adjustment amount, and the adjustment amount is fed back to an active steering actuator (or, for example, the steering system 132, the electronic control unit 138, or the body control module 140 in FIG. 1) for adjustment. It may be understood that the PID controller is merely an example. During actual application, the adjustment amount may alternatively be calculated by using another controller or in another manner. This is not specifically limited herein.

The adjustment amount in this embodiment of this application is mainly used to reduce the abnormal yaw of the terminal device. The adjustment amount may be an adjustment amount of a steering angle, or may be an active yaw moment or the like. This is not specifically limited herein.

In this embodiment of this application, when the unexpected yaw or the abnormal yaw occurs on the vehicle, the adjustment amount is determined based on the average yaw rate of the vehicle in the period of time before the abnormal yaw. The adjustment amount is used to perform intervention on steering of the vehicle, to reduce or suppress the abnormal yaw of the vehicle, and therefore improve traveling safety and stability of the vehicle. In other words, when the abnormal yaw or the unexpected yaw occurs on the vehicle, it is difficult for most drivers to effectively control the vehicle. The method provided in this embodiment of this application may be applied when the abnormal yaw occurs. The average yaw rate in the period of time before the abnormal yaw is triggered is used as a target, so that movement of the vehicle can remain consistent, and safety of the vehicle and the driver can be improved.

Further, the abnormal yaw of the vehicle is usually transient instability. In this case, if intervention is performed on the steering of the vehicle continuously by using an average angular velocity in the period of time after the abnormal yaw occurs on the vehicle, driving experience of the driver is affected. Therefore, after the vehicle is stable, a steering requirement of the driver may be responded.

Specifically, after it is determined that the vehicle has eliminated the transient instability generated when the unexpected yaw occurs, the adjustment amount may be calculated based on a target yaw rate (namely, the first yaw rate under normal yaw) and the actual yaw rate, so that the vehicle can respond to the steering requirement of the driver in time after the vehicle is stable. In other words, the terminal device further includes the steering component. The steering component is used by the operator to control the moving direction of the terminal device. When the normal yaw occurs on the terminal device, the first yaw rate is related to an operation of the operator on the steering component. The operation is mainly used to control a rotation direction of the vehicle such as an angle of rotating the steering wheel (that is, the steering component).

For example, the first yaw rate may be specifically determined according to the following formulas and the operation of the driver on the steering component. Specifically, a real-time expected yaw rate may be calculated (for example, by using formula 2, formula 3, and formula 4) based on a yaw moment that is caused by a steering wheel angle of the and a difference between torque of the left and right wheels. Alternatively, the real-time expected yaw rate may be calculated (for example, by using formula 2) based on the steering wheel angle. The real-time expected yaw rate may be understood as a first yaw rate under non-abnormal yaw.

$$\text{Formula 1:} \quad r_{ref\delta} = \frac{v_x}{mv_x^2 \dfrac{c_r l_r - c_f l_f}{c_f c_r L} + L} i\delta \ ;$$

$$\text{Formula 2:} \quad r_{refM_z} = \frac{v_x \dfrac{c_f + c_r}{c_f c_r L}}{mv_x^2 \dfrac{c_r l_r - c_f l_f}{c_f c_r L} + L} M_z \ ;$$

and

$$\text{Formula 3:} \quad r_{ref} = r_{ref\delta} - r_{refM_z}$$

$r_{ref}$ is the first yaw rate under the non-abnormal yaw; $\delta$ is the steering wheel angle, that is, the steering wheel angle controlled by the driver; $i$ is a gear ratio of the steering system; $M_z$ is an active yaw moment generated due to the difference between the torque of the left and right wheels; $v_x$ is a longitudinal vehicle speed (that is, a moving speed of the X axis shown in FIG. 4); $m$ is mass of the vehicle; $l_f$ and $l_r$ are respectively distances from a vehicle centroid to a front axle and a rear axle; $L$ is a wheel base of the vehicle, where $L = l_f + l_r$; and $l_f$ and $l_r$ are respectively cornering stiffness of the front axle and the rear axle. Certainly, if the vehicle travels normally, $M_z$ may be 0.

It may be understood that the foregoing formulas are merely examples of determining the first yaw rate. During actual application, the first yaw rate may alternatively be determined according to another formula. This is not specifically limited herein. A steering wheel angle of the vehicle may be obtained by using the sensor system. Generally, there is a correspondence between a heading angle of the vehicle and the steering wheel angle of the vehicle. Alternatively, the corresponding steering wheel angle of the vehicle may be determined based on the heading angle of the vehicle. For different vehicles, correspondences between the heading angle of the vehicle and the steering wheel angle of the vehicle are different. This is not limited in this embodiment of this application.

In this manner, transient instability caused by a wrong operation of a common driver when the abnormal yaw occurs on the vehicle is avoided. In addition, after it is determined that a risk of the transient instability is eliminated, a design of an arbitration module does not affect an operation such as steering/lane change for obstacle avoidance performed by the driver.

There are the foregoing two cases for the first yaw rate. In the first case, the first yaw rate is the average yaw rate of the vehicle in the period of time before the abnormal yaw occurs. In the second case, the first yaw rate is a yaw rate determined based on an operation of the driver on the steering component under normal sway or non-abnormal yaw (or referred to as a second yaw rate).

In this case, in a specific implementation process, selection of the two cases may be understood as an arbitration process.

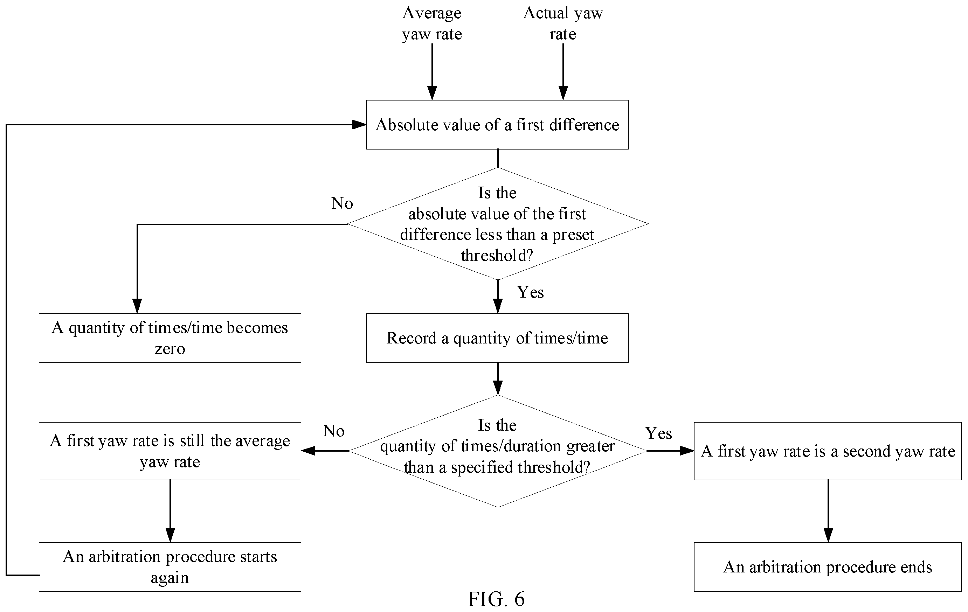

When the unexpected yaw or the abnormal yaw occurs, the control device may set the expected yaw rate (namely, the first yaw rate) as a yaw rate time sequence signal (namely, the average yaw rate). Based on this, an arbitration mechanism is also formulated, so that the vehicle can respond to an instruction of the driver in time while ensuring stability. An arbitration procedure may be shown in FIG. 6. Specific arbitration logic is as follows: When an absolute value of a first difference between the actual yaw rate and the average yaw rate is less than a preset threshold and remains lasts for a specified threshold, the vehicle has eliminated the risk of transient instability. The preset threshold is specifically a preset angular velocity threshold (for example, 0.05 radians/second). The specified threshold may be a preset time period (for example, 0.2s) or an accumulated preset quantity of times (for example, 20 times). The control device may switch the first yaw rate from the average yaw rate to the second yaw rate (that is, a yaw rate determined based on a real-time steering wheel signal of the driver), and then calculates the adjustment amount based on the actual yaw rate.

In addition, embodiments of this application further provide another control method, which may be used to trigger enabling of steering protection. The steering protection is used to reduce abnormal yaw of the terminal device caused by a wrong operation of the operator. For example, the method may be applied to a determination of the abnormal yaw in the embodiment shown in FIG. 3. The method may also be applied to a method for enabling other steering protection. This is not specifically limited herein.

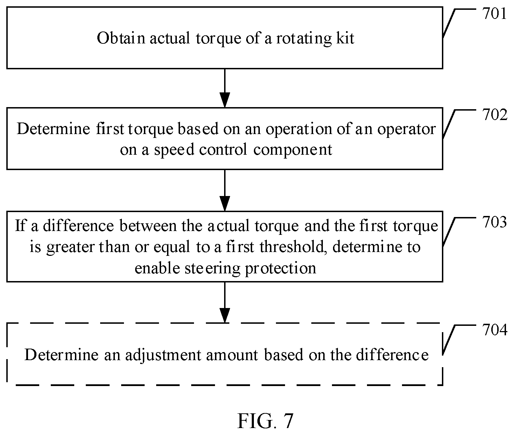

FIG. 7 is a schematic flowchart of a control method according to an embodiment of this application. The method may be performed by a control device/terminal device, or may be performed by a component (for example, a processor, a chip, or a chip system) of the control device/terminal device. The control device may be a control element inside the terminal device (for example, the control system or the sensor system in the vehicle in FIG. 1), or may be an external control device independent of the terminal device. The terminal device may be a movable device such as a vehicle or a robot. The method may include step 701 to step 704. The following describes step 701 to step 704 in detail by using an example in which the method is performed by the control device.

First, a terminal device to which the method in this embodiment is applicable is described. The method is applied to a terminal device including a rotating kit and a speed control control, the rotating kit is configured to implement movement of the terminal device, and the speed control component is used by an operator to control a moving speed of the terminal device. For example, when the terminal device is a vehicle, the rotating kit includes wheels on two sides of the vehicle, the rotating kit includes a steering wheel, and the speed control component includes one or more of the following: an accelerator pedal and a brake pedal.

Step 701: Obtain actual torque of the rotating kit.

In this embodiment of this application, the control device may obtain the actual torque of the rotating kit in a plurality of manners. The actual torque may be obtained through a motor torque sensor of the terminal device, or may be obtained through a cylinder pressure sensor, or the like. This is not specifically limited herein.

For example, when the terminal device is the vehicle, the actual torque may be understood as current torque obtained through measurement by a sensor at a wheel. When the vehicle includes four wheels, the actual torque may include torque at the four wheels.

Step 702: Determine first torque based on an operation of the operator on the speed control component.

The control device may further determine the first torque based on the operation of the operator (or referred to as a driver) on the speed control component. The first torque may also be referred to as required torque of the operator. There are a plurality of cases for the speed control component. For example, the terminal device is the vehicle. In this case, the speed control component may include one or more of the following: the accelerator pedal, the brake pedal, various accelerator gears, or the like of the vehicle. Therefore, the operation of the operator on the speed control component may be a distance/travel of the operator stepping on the accelerator pedal, the brake pedal, or the like.

Step 703: If a difference between the actual torque and the first torque is greater than or equal to a first threshold, determine to enable steering protection, where the steering protection is used to reduce abnormal yaw of the terminal device.

After obtaining the actual torque and the first torque, if the difference between the actual torque and the first torque is greater than or equal to the first threshold, the control device determines to enable the steering protection. The steering protection is used to reduce the abnormal yaw of the terminal device.

The steering protection may be the method in the embodiment shown in FIG. 3, or may be another steering protection method. This is not specifically limited herein.

In this embodiment of this application, a difference between parameters related to a quantity of rotating components (for example, torque, and slip rate and a wheel speed that are subsequently related) is different. In a possible implementation, when the terminal device includes one axle rotating kit (for example, the vehicle includes two wheels), the difference is specifically an absolute difference between a rotating component on one side and a rotating component on the other side. In another possible implementation, when the terminal device includes two axle rotating kits (for example, the vehicle includes four wheels), the difference is specifically a difference between a sum of front and rear rotating components on one side and a sum of front and rear rotating components on the other side.

For example, when the vehicle includes four wheels, a parameter difference may be obtained according to formula 4.

$$\text{Formula 4:} \quad f = \left| \left( f_l + r_l \right) - \left( f_r + r_r \right) \right|$$

$f_l$ indicates a parameter of a left front wheel, $r_l$ indicates a parameter of a left rear wheel, $f_r$ indicates a parameter of a right front wheel, and $r_r$ indicates a parameter of a right rear wheel.

It may be understood that formula 4 is merely an example of determining the difference. During actual application, the difference may alternatively be determined according to another formula, for example, $f = |f_l - f_r + r_l - r_r|$. This is not specifically limited herein.

Step 704: Determine an adjustment amount based on the difference, where the adjustment amount is used to control a yaw status of the device. This step is optional.

Optionally, after the difference between the actual torque and the first torque is determined, the adjustment amount used to control the yaw status of the device may be further determined based on the difference, and yaw adjustment is performed on the terminal device by using the adjustment amount.

Specifically, the difference is input to a PID controller to calculate the adjustment amount, and the adjustment amount is fed back to an active steering actuator (or, for example, the steering system 132, the electronic control unit 138, or the body control module 140 shown in FIG. 1) for adjustment.

The adjustment amount in this embodiment of this application is mainly used to reduce the abnormal yaw of the terminal device. The adjustment amount may be an adjustment amount of a steering angle, or may be an active yaw moment or the like. This is not specifically limited herein.

A time sequence between steps in this embodiment is not limited. Step 701 may be performed before step 702, or may be performed after step 702. This is not specifically limited herein.

In a possible implementation, the method in this embodiment includes step 701 to step 703. In another possible implementation, the method in this embodiment includes step 701 to step 704.

In this embodiment, a torque difference is introduced as a trigger condition for enabling the steering protection. In other words, the torque difference is used as a condition for active steering activation, especially in a scenario in which a traction control system (Traction Control System, TCS)/an anti-lock brake system (Anti-lock Brake System, ABS) performs intervention. The torque difference and the threshold are used as the condition for enabling the steering protection, so that rationality of an occasion for triggering the steering protection can be improved. In addition, for a vehicle equipped with the TCS/ABS, it is insufficient to detect unexpected yaw only based on the slip rate/wheel speed. A difference that is between driving/brake torque and that is generated by TCS/ABS intervention is introduced as an auxiliary criterion for activation, so that the unexpected yaw can be more accurately determined. In addition, a feedforward control amount is calculated in a manner of combining the slip rate/wheel speed and the TCS/ABS. In this way, unexpected yaw movement can be effectively suppressed, and a workload on a feedback loop can be reduced.

In addition, the torque difference shown in FIG. 7 may be used as the trigger condition for the steering protection, or may be used as an auxiliary trigger condition for the steering protection. In other words, in addition to the torque difference, the trigger condition for the steering protection may further include a parameter difference between the first rotating component and the second rotating component. The parameter difference includes one or more of the following: a slip rate difference, a wheel speed difference, and the like.

It may be understood that determining of the abnormal yaw in the embodiment shown in FIG. 3 is similar to the foregoing trigger condition. Alternatively, it is understood that the trigger condition described in the embodiment shown in FIG. 7 may be used to trigger the step in the embodiment shown in FIG. 3. In the embodiment shown in FIG. 3, a condition for determining that the abnormal yaw occurs on the terminal device includes a plurality of cases. In other words, if a preset condition is met, the control device determines that the abnormal yaw occurs on the terminal device. The preset condition includes one or more of the following:

a second difference between the first torque and second torque is greater than or equal to the first threshold, where the terminal device further includes the speed control component, the speed control component is used by the operator to control the moving speed of the terminal device, the first torque is determined based on the operation of the operator on the speed control component, and the second torque is the actual torque at the rotating kit. This may also be referred to as decision logic 2 for triggering the steering protection; and

a parameter difference between the first rotating component and the second rotating component is greater than or equal to a second threshold, where the parameter difference includes a slip rate difference and/or a rotation speed difference. This may also be referred to as decision logic 1 for triggering the steering protection.

In this embodiment of this application, the decision logic 1 and the decision logic 2 may be used separately or in combination. This is not specifically limited herein. For the vehicle equipped with a TCS or ABS function, if the TCS and ABS functions have been triggered, a difference between slip rates of wheels on two sides may be small. It may be insufficient to determine activation of an active steering function only based on the slip rate. In this case, it is determined whether an absolute value of the wheel speed difference is greater than a given threshold based on torque of coaxial wheels on left and right sides of the vehicle intervened by the TCS/ABS, so that rationality of triggering the active steering activation (that is, enabling the steering protection) can be improved.

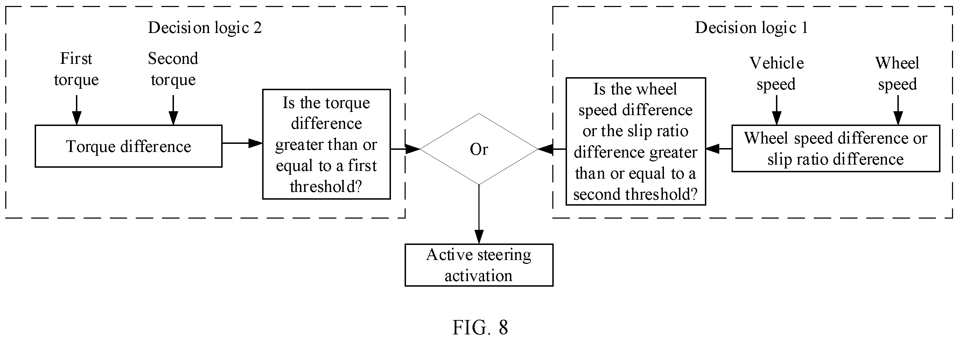

The following describes the decision logic 1 and the decision logic 2 for triggering the steering protection with reference to FIG. 8. Provided that either of the decision logic 1 and the decision logic 2 is true, it is determined that the active steering function is activated.

In the decision logic 1, the wheel speed difference is determined based on a wheel speed of the rotating kit, and whether to activate the active steering is determined based on whether the wheel speed difference is greater than or equal to the second threshold. Alternatively, the slip rate difference may be determined based on a vehicle speed and the wheel speed of the rotating kit, and whether to activate the active steering is determined based on whether the slip rate is greater than or equal to the second threshold. In other words, in the decision logic 1, if accurate vehicle speed information cannot be obtained, a difference between wheel speeds of the wheels on the left and right sides may be directly calculated, and whether to activate the active steering is determined by using the wheel speed difference and the second threshold.

In this embodiment of this application, the slip rate may be calculated according to formula 5:

$$\text{Formula 5:} \quad K_i \begin{cases} 1 - \dfrac{v_{xi}}{R\omega_i}, v_{xi} < R\omega_i \\ \dfrac{v_{xi}}{R\omega_i} - 1, v_{xi} > R\omega_i \end{cases}$$

i is a specific wheel, and a value range of i is 1 to 4 for a four-wheel vehicle; $K_i$ is the slip rate; $v_{xi}$ is a longitudinal speed at a wheel hub of each wheel; $R$ is a wheel radius; and $\omega_i$ is a roll rate of the wheel. When $v_{xi} < R\omega_i$, the vehicle is in a driving working condition. In this case, the slip rate is defined as positive. When $v_{xi} > R\omega_i$, the vehicle is in a brake working condition. In this case, the slip rate is defined as negative.

It may be understood that formula 5 is merely an example of calculating the slip rate. During actual application, the slip rate may alternatively be determined according to another formula. This is not specifically limited herein.

Specific calculation formulas of the slip rate difference, the wheel speed difference, and the torque difference may be obtained according to formula 2 or the like. This is not limited herein.

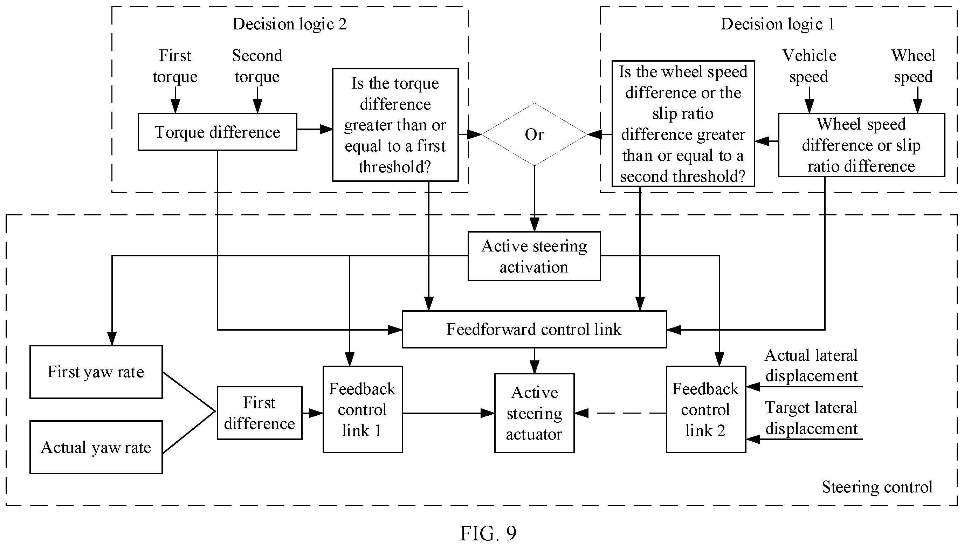

In addition, an embodiment of this application provides a system architecture. The system architecture may include the embodiment shown in FIG. 3, the embodiment shown in FIG. 7, and the embodiment shown in FIG. 8. FIG. 9 shows a system architecture according to an embodiment of this application.

The system architecture includes the decision logic 1, the decision logic 2, a feedforward control link, and a feedback control link 1. Optionally, the system architecture may further include a feedback control link 2.

For the decision logic 1 and the decision logic 2, refer to the description in the embodiment shown in FIG. 8. The feedforward control link 1 is used to determine a feedforward adjustment amount based on the slip rate difference, the wheel speed difference, or the torque difference between the coaxial wheels on the left and right sides in the decision logic (1 or 2).

The feedback control link 1 is used to: when active steering protection is triggered (or understood as that the abnormal yaw occurs on the terminal device), determine a first feedback adjustment amount (that is, the adjustment amount in the embodiment shown in FIG. 3) based on the first difference between the average yaw rate (that is, the first yaw rate during abnormal yaw) and the actual yaw rate. For details, refer to the adjustment amount in the embodiment shown in FIG. 3. Details are not described herein again.

The feedback control link 2 is mainly used to determine a second feedback adjustment amount based on deviation between an actual traveling direction and the target traveling direction of the terminal device. The feedback control link 2 is optional.

It may be understood that the adjustment amount (for example, the feedforward adjustment amount, the first feedback adjustment amount, and the second feedback adjustment amount) may be applied to a steer-by-wire steering scenario, or may be applied to a scenario of an electric power steering (Electric Power Steering, EPS) system, and the like. This is not specifically limited herein.

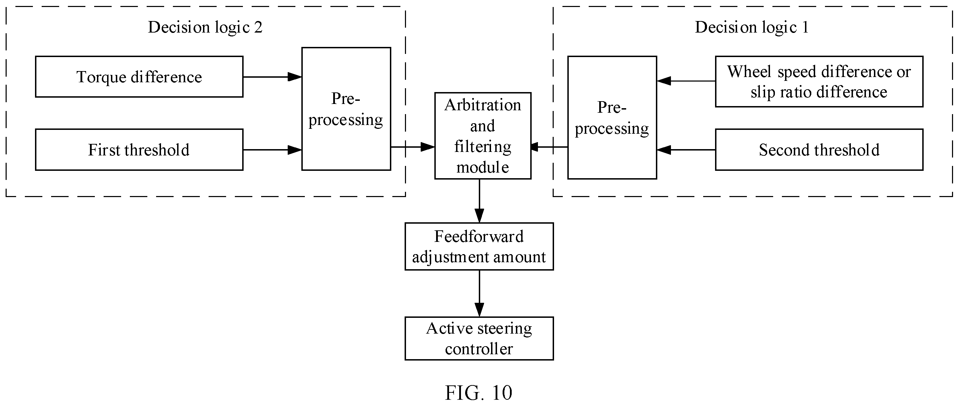

The feedforward adjustment amount may be obtained as shown in FIG. 10. The feedforward adjustment amount in the feedforward control link is determined based on the parameter difference (for example, the vehicle speed difference or the slip rate difference) in the decision logic 1 and the torque difference in the decision logic 2.

Specifically, in the decision logic 1, after a difference between the torque difference and the first threshold is calculated and an absolute value is obtained, normalization is performed. In the decision logic 2, after a difference between the parameter difference and the second threshold is calculated and an absolute value is obtained, normalization is performed. Normalized values in the decision logic 1 and the decision logic 2 are input to an arbitration and filtering module. The arbitration and filtering module may select one value from the two normalized values according to a specific rule (for example, selecting a value with a larger absolute value from the two values). The arbitration and filtering module may also perform weighted averaging on the two normalized values to obtain one value, and perform low-pass filtering processing on the value to obtain the feedforward adjustment amount. It may be understood that how the arbitration and filtering module determines the feedforward adjustment amount based on the two decision logic is merely an example. During actual application, there may be another possibility. This is not specifically limited herein.

In addition, in consideration of a subsequent direction of the adjustment amount, the difference may not be taken as an absolute value. In other words, positive and negative signs are reserved. Alternatively, before the absolute value is taken, the positive and negative signs may be used as a manner of determining the subsequent direction of the adjustment amount. This is not specifically limited herein.

Optionally, a feedforward coefficient may also be set. A value obtained through low-pass filtering processing may be multiplied by the feedforward coefficient to obtain the feedforward adjustment amount. The feedforward coefficient may be set according to an actual requirement. This is not specifically limited herein.

In this way, the abnormal yaw can be effectively suppressed, and the workload of the feedback loop can be reduced. Even if there is no feedback loop, a degree of the abnormal yaw can also be effectively reduced when the feedforward control link works independently, so that an operation workload and psychological pressure of the driver can be reduced.

Specifically, in the feedback control link 2, the actual traveling direction of the terminal device is first obtained, then the target traveling direction of the terminal device is obtained, and the second feedback adjustment amount is determined based on the deviation between the actual traveling direction and the target traveling direction. The second feedback adjustment amount is used to control a difference between a traveling direction and the target traveling direction of the terminal device to be within a specific range or consistent. The actual traveling direction may be determined through a sensor such as a camera. The target traveling direction may be determined based on a direction indication on a ground. Implementation of the feedback control link 2 depends on the sensor such as the camera. The second feedback adjustment amount (for example, a yaw moment) that enables the vehicle to keep in a current lane/traveling direction is calculated based on information about a relative location between a vehicle and a road, that is, deviation between lateral displacement and a heading angle, and a preset gain coefficient. A main objective of the feedback control link 2 is to improve direction stability of the vehicle to travel along a current movement lane/traveling direction when there is a trend of abnormal yaw.

In this embodiment, when the abnormal yaw occurs on the terminal device, a yaw status of the vehicle may be adjusted based on the feedforward adjustment amount and the feedback adjustment amount, so that the terminal device can still effectively stabilize the traveling direction when there is a trend of abnormal yaw.

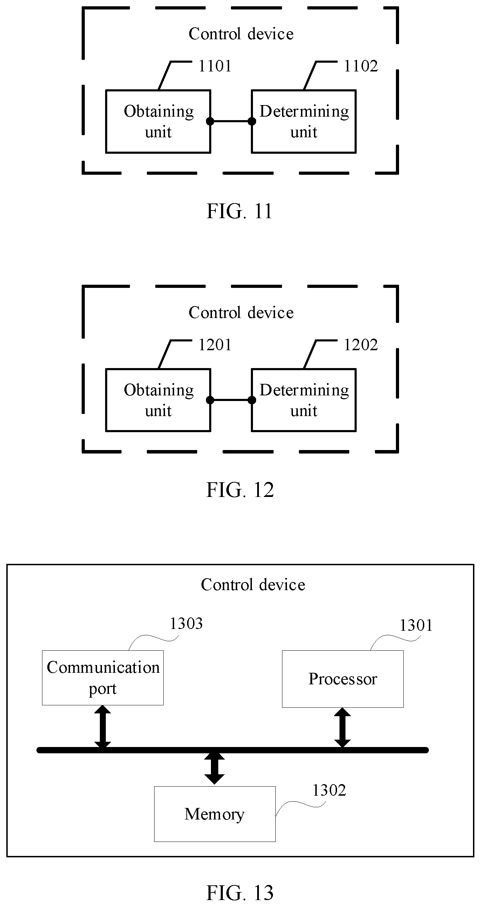

The foregoing describes the control method in embodiments of this application. The following describes a control device in embodiments of this application. Refer to FIG. 11. An embodiment of the control device in embodiments of this application includes:

an obtaining unit 1101, configured to obtain a first yaw rate, where when abnormal yaw occurs on a terminal device, the first yaw rate is related to an average yaw rate of the terminal device in a first time period, the first time period is earlier than a moment at which the abnormal yaw occurs, and a rotating kit is configured to implement movement of the terminal device, where
the obtaining unit 1101 is further configured to obtain an actual yaw rate of the terminal device at a first moment, and the first moment is later than an end moment of the first time period; and
a determining unit 1102, configured to determine an adjustment amount based on a first difference between the first yaw rate and the actual yaw rate, where the adjustment amount is used to reduce the abnormal yaw.

Optionally, the terminal device further includes a steering component, the steering component is used by an operator to control a moving direction of the terminal device, and when normal yaw occurs on the terminal device, the first yaw rate is related to an operation of the operator on the steering component.

Optionally, the terminal device includes the rotating kit, the rotating kit is configured to implement the movement of the terminal device, the rotating kit includes a first rotating component and a second rotating component, and the first rotating component and the second rotating component are coaxial. The determining unit 1102 is further configured to: if a preset condition is met, determine that the abnormal yaw occurs on the terminal device. The preset condition includes one or more of the following: a second difference between first torque and second torque is greater than or equal to a first threshold, where the terminal device further includes a speed control component, the speed control component is used by the operator to control a moving speed of the terminal device, the first torque is determined based on an operation of the operator on the speed control component, and the second torque is actual torque at the rotating kit; and a parameter difference between the first rotating component and the second rotating component is greater than or equal to a second threshold, where the parameter difference includes a slip rate difference and/or a rotation speed difference.

Optionally, the terminal device is a vehicle, and the rotating kit includes a wheel on one side and a wheel on the other side of the vehicle.

In this embodiment, an operation performed by each unit in the control device is similar to that described in embodiments shown in FIG. 1 to FIG. 6 and FIG. 8 to FIG. 10. Details are not described herein again.

In this embodiment, when unexpected yaw or the abnormal yaw occurs on the vehicle, the adjustment amount is determined based on the average yaw rate of the vehicle in a period of time before the abnormal yaw. The adjustment amount is used to perform feedback and intervention on steering of the vehicle, to reduce or suppress the abnormal yaw of the vehicle, and therefore improve traveling safety and stability of the vehicle.

Refer to FIG. 12. Another embodiment of a control device in embodiments of this application includes:

an obtaining unit 1201, configured to obtain actual torque of a rotating kit in a terminal device, where the rotating kit is configured to implement movement of the terminal device; and

a determining unit 1202, configured to determine first torque based on an operation of the operator on a speed control component in the terminal device, where the speed control component is used by the operator to control a moving speed of the terminal device, where

the determining unit 1202 is configured to: if a difference between the actual torque and the first torque is greater than or equal to a first threshold, determine to enable steering protection, where the steering protection is used to reduce abnormal yaw of the terminal device.

Optionally, the determining unit 1202 is further configured to determine an adjustment amount based on the difference, and the adjustment amount is used to control a yaw status of the terminal device.

Optionally, the terminal device is a vehicle, and the rotating kit includes a wheel on one side and a wheel on the other side of the vehicle.

In this embodiment, an operation performed by each unit in the control device is similar to that described in embodiments shown in FIG. 1 to FIG. 5 and FIG. 7 to FIG. 10. Details are not described herein again.

In this embodiment, a torque difference is introduced as a trigger condition for enabling the steering protection. In other words, the torque difference is used as a condition for active steering activation, especially in a scenario in which a traction control system (Traction Control System, TCS)/an anti-lock brake system (Anti-lock Brake System, ABS) performs intervention. The torque difference and the threshold are used as the condition for enabling the steering protection, so that rationality of an occasion for triggering the steering protection can be improved. In addition, for a vehicle equipped with the TCS/ABS, it is insufficient to detect unexpected yaw only based on the slip rate/wheel speed. A difference that is between driving/brake torque and that is generated by TCS/ABS intervention is introduced as an auxiliary criterion for activation, so that the unexpected yaw can be more accurately determined. In addition, a feedforward control amount is calculated in a manner of combining the slip rate/wheel speed and the TCS/ABS. In this way, unexpected yaw movement can be effectively suppressed, and a workload on a feedback loop can be reduced.

FIG. 13 is a diagram of another structure of a control device according to an embodiment of this application. The control device may include a processor 1301, a memory 1302, and a communication port 1303. The processor 1301, the memory 1302, and the communication port 1303 are interconnected through a line. The memory 1302 stores program instructions and data.

The memory 1302 stores program instructions and data that correspond to steps performed by the control device in the corresponding implementations shown in FIG. 1 to FIG. 7.

The processor 1301 is configured to perform steps performed by the control device according to any one of embodiments shown in FIG. 1 to FIG. 7.

The communication port 1303 may be configured to send and receive data, and is configured to perform steps related to obtaining, sending, and receiving according to any one of embodiments shown in FIG. 1 to FIG. 7.

In an implementation, the control device may include more or fewer components than those shown in FIG. 13. This is merely an example for description, but is not limited in this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A control method, wherein the method comprises:

   obtaining a first yaw rate, wherein when abnormal yaw occurs on a terminal device, the first yaw rate is related to an average yaw rate of the terminal device in a first time period, and the first time period is earlier than a moment at which the abnormal yaw occurs;
   obtaining an actual yaw rate of the terminal device at a first moment, wherein the first moment is later than an end moment of the first time period; and
   determining an adjustment amount based on a first difference between the first yaw rate and the actual yaw rate, wherein the adjustment amount is used to reduce the abnormal yaw.

2. The method according to claim 1, wherein the terminal device further comprises a steering component, the steering component is used by an operator to control a moving direction of the terminal device, and when normal yaw occurs on the terminal device, the first yaw rate is related to an operation of the operator on the steering component.

3. The method according to claim 1 or 2, wherein the terminal device comprises a rotating kit, the rotating kit is configured to implement movement of the terminal device, the rotating kit comprises a first rotating component and a second rotating component, the first rotating component and the second rotating component are coaxial, and the method further comprises:

   if a preset condition is met, determining that the abnormal yaw occurs on the terminal device, wherein the preset condition comprises one or more of the following:

   a second difference between first torque and second torque is greater than or equal to a first threshold, wherein the terminal device further comprises a speed control component, the speed control component is used by the operator to control a moving speed of the terminal device, the first torque is determined based on an operation of the operator on the speed control component, and the second torque is actual torque at the rotating kit; and
   a parameter difference between the first rotating component and the second rotating component is greater than or equal to a second threshold, wherein the parameter difference comprises a slip rate difference and/or a rotation speed difference.

4. The method according to any one of claims 1 to 3, wherein the terminal device is a vehicle, and the rotating kit comprises a wheel on one side and a wheel on the other side of the vehicle.

5. A control method, wherein the method is applied to a terminal device comprising a rotating kit and a speed control control, the rotating kit is configured to implement movement of the terminal device, the speed control component is used by an operator to control a moving speed of the terminal device, and the method comprises:

   obtaining actual torque of the rotating kit;
   determining first torque based on an operation of the operator on the speed control component; and
   if a difference between the actual torque and the first torque is greater than or equal to a first threshold, determining to enable steering protection, wherein the steering protection is used to reduce abnormal yaw of the terminal device.

**6.** The method according to claim 5, wherein the method further comprises:

determining an adjustment amount based on the difference, wherein the adjustment amount is used to control a yaw status of the terminal device.

**7.** The method according to claim 5 or 6, wherein the terminal device is a vehicle, and the rotating kit comprises a wheel on one side and a wheel on the other side of the vehicle.

**8.** A control device, wherein the control device comprises:

an obtaining unit, configured to obtain a first yaw rate, wherein when abnormal yaw occurs on a terminal device, the first yaw rate is related to an average yaw rate of the terminal device in a first time period, and the first time period is earlier than a moment at which the abnormal yaw occurs, wherein
the obtaining unit is further configured to obtain an actual yaw rate of the terminal device at a first moment, and the first moment is later than an end moment of the first time period; and
a determining unit, configured to determine an adjustment amount based on a first difference between the first yaw rate and the actual yaw rate, wherein the adjustment amount is used to reduce the abnormal yaw.

**9.** The control device according to claim 8, wherein the terminal device further comprises a steering component, the steering component is used by an operator to control a moving direction of the terminal device, and when normal yaw occurs on the terminal device, the first yaw rate is related to an operation of the operator on the steering component.

**10.** The control device according to claim 8 or 9, wherein the terminal device comprises a rotating kit, the rotating kit is configured to implement movement of the terminal device, the rotating kit comprises a first rotating component and a second rotating component, and the first rotating component and the second rotating component are coaxial;

the determining unit is further configured to: if a preset condition is met, determine that the abnormal yaw occurs on the terminal device; and
the preset condition comprises one or more of the following:

a second difference between first torque and second torque is greater than or equal to a first threshold, wherein the terminal device further comprises a speed control component, the speed control component is used by the operator to control a moving speed of the terminal device, the first torque is determined based on an operation of the operator on the speed control component, and the second torque is actual torque at the rotating kit; and
a parameter difference between the first rotating component and the second rotating component is greater than or equal to a second threshold, wherein the parameter difference comprises a slip rate difference and/or a rotation speed difference.

**11.** The control device according to any one of claims 8 to 10, wherein the terminal device is a vehicle, and the rotating kit comprises a wheel on one side and a wheel on the other side of the vehicle.

**12.** A control device, wherein the control device comprises:

an obtaining unit, configured to obtain actual torque of a rotating kit in a terminal device, wherein the rotating kit is configured to implement movement of the terminal device; and
a determining unit, configured to determine first torque based on an operation of the operator on a speed control component in the terminal device, wherein the speed control component is used by the operator to control a moving speed of the terminal device, wherein
the determining unit is configured to: if a difference between the actual torque and the first torque is greater than or equal to a first threshold, determine to enable steering protection, wherein the steering protection is used to reduce abnormal yaw of the terminal device.

**13.** The control device according to claim 12, wherein the determining unit is further configured to determine an adjustment amount based on the difference, and the adjustment amount is used to control a yaw status of the terminal device.

**14.** The control device according to claim 12 or 13, wherein the terminal device is a vehicle, and the rotating kit comprises a wheel on one side and a wheel on the other side of the vehicle.

**15.** A vehicle, wherein the vehicle comprises the control device according to any one of claims 8 to 14.

**16.** A control device, comprising a processor, wherein the processor is coupled to a memory, the memory is configured to store a program or instructions, and when the program or the instructions are executed by the processor, the control device is enabled to perform the method according to any one of claims 1 to 4, or the control device is enabled to perform the method according to any one of claims 5 to 7.

17. A computer storage medium, comprising computer instructions, wherein when the computer instructions are run on a control device, the control device is enabled to perform the method according to any one of claims 1 to 7.

18. A computer program product, wherein when the computer program product runs on a computer, the computer is enabled to perform the method according to any one of claims 1 to 7.

**Vehicle**

**Travel system 102**

Engine 118

Transmission apparatus 120

Energy source 119

Wheel 121

**Sensor system 104**

Positioning system 122

Inertial measurement unit 124

Radar 126

Laser rangefinder 128

Camera 130

**Control system 106**

Steering system 132

Accelerator 134

Brake unit 136

Electronic control unit 138

Processor 1381

Memory 1382

Body control module 140

**Peripheral device 108**

Wireless communication system 146

Navigation system 148

Microphone 150

Speaker 152

Power supply 110

User interface 116

FIG. 1

Different adhesion coefficients

FIG. 2

```
┌─────────────────────────────────────────────────┐ ┌─ 301
│                                                  │/
│              Obtain a first yaw rate             │
│                                                  │
└─────────────────────────────────────────────────┘
                         │
                         ▼
┌─────────────────────────────────────────────────┐ ┌─ 302
│  Obtain an actual yaw rate of a terminal device at a first │/
│                     moment                       │
└─────────────────────────────────────────────────┘
                         │
                         ▼
┌─────────────────────────────────────────────────┐ ┌─ 303
│  Determine an adjustment amount based on a first difference │/
│   between the first yaw rate and the actual yaw rate │
└─────────────────────────────────────────────────┘
```

FIG. 3

FIG. 4

FIG. 5

Rotating kit

First rotating component

Second rotating component

Steering component

Speed control component

First rotating component

Second rotating component

Rotating kit

Average
yaw rate

Actual yaw
rate

Absolute value of a first difference

Is the absolute value of the first difference less than a preset threshold?

No → A quantity of times/time becomes zero

Yes → Record a quantity of times/time

Is the quantity of times/duration greater than a specified threshold?

No → A first yaw rate is still the average yaw rate

Yes → A first yaw rate is a second yaw rate

A first yaw rate is still the average yaw rate → An arbitration procedure starts again

A first yaw rate is a second yaw rate → An arbitration procedure ends

FIG. 6

Obtain actual torque of a rotating kit ⟋ 701

Determine first torque based on an operation of an operator on a speed control component ⟋ 702

If a difference between the actual torque and the first torque is greater than or equal to a first threshold, determine to enable steering protection ⟋ 703

Determine an adjustment amount based on the difference ⟋ 704

FIG. 7

Decision logic 2

First
torque

Second
torque

Torque difference → Is the torque difference greater than or equal to a first threshold? → ◇ Or ◇ ← Is the wheel speed difference or the slip ratio difference greater than or equal to a second threshold? ← Wheel speed difference or slip ratio difference

Decision logic 1

Vehicle
speed

Wheel
speed

Active steering
activation

FIG. 8

FIG. 9

FIG. 10

Control device

1101 1102

Obtaining unit

Determining unit

FIG. 11

Control device

1201 1202

Obtaining unit

Determining unit

FIG. 12

Control device

1303 1301

Communication port

Processor

1302

Memory

FIG. 13

## INTERNATIONAL SEARCH REPORT

| International application No. |
| --- |
| **PCT/CN2022/112448** |

| A. | CLASSIFICATION OF SUBJECT MATTER |
| --- | --- |

B60W30/02(2012.01)i

According to International Patent Classification (IPC) or to both national classification and IPC

| B. | FIELDS SEARCHED |
| --- | --- |

Minimum documentation searched (classification system followed by classification symbols)

IPC:B60W

Documentation searched other than minimum documentation to the extent that such documents are included in the fields searched

Electronic data base consulted during the international search (name of data base and, where practicable, search terms used)

CNPAT, WPI, EPODOC, CNKI: 华为技术有限公司, 梁艺潇, 刘栋豪, 杨维妙, 张永生, 车辆, 转动, 横摆, 角速度, 异常, 时间段, 平均, 差值, 调整量, 转向, 干预, 减少, 抑制, 安全性, 稳定性, control, stability, vehicle, driv+, slip rate, transverse, difference, threshold

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112440979 A (HUAWEI TECHNOLOGIES CO., LTD.) 05 March 2021 (2021-03-05) description, paragraphs [0067]-[0301], and figures 1-10 | 1-18 |
| X | CN 112849127 A (BEIJING INSTITUTE OF TECHNOLOGY) 28 May 2021 (2021-05-28) description, paragraphs [0060]-[0226], and figures 1-6 | 1-18 |
| X | CN 113085578 A (ZHEJIANG GEELY HOLDING GROUP CO., LTD. et al.) 09 July 2021 (2021-07-09) description, paragraphs [0058]-[0077], and figures 1-8 | 1-18 |
| X | CN 113401114 A (JILIN UNIVERSITY) 17 September 2021 (2021-09-17) description, paragraphs [0036]-[0061], and figure 1 | 1-18 |
| X | CN 114771530 A (CHINA FAW GROUP CO., LTD.) 22 July 2022 (2022-07-22) description, paragraphs [0029]-[0127], and figures 1-4 | 1-18 |
| A | CN 112550430 A (NEXTEER AUTOMOTIVE (SUZHOU) CO., LTD.) 26 March 2021 (2021-03-26) entire document | 1-18 |

☑ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **10 March 2023** | **17 March 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

| International application No. |
| --- |
| **PCT/CN2022/112448** |

### C.    DOCUMENTS CONSIDERED TO BE RELEVANT

| Category* | Citation of document, with indication, where appropriate, of the relevant passages | Relevant to claim No. |
| --- | --- | --- |
| A | JP 2003291841 A (TOYODA MACHINE WORKS, LTD. et al.) 15 October 2003 (2003-10-15)<br>        entire document | 1-18 |

Form PCT/ISA/210 (second sheet) (July 2022)

INTERNATIONAL SEARCH REPORT
Information on patent family members

International application No.

**PCT/CN2022/112448**

| Patent document cited in search report | | | Publication date (day/month/year) | Patent family member(s) | | | Publication date (day/month/year) |
|---|---|---|---|---|---|---|---|
| CN | 112440979 | A | 05 March 2021 | WO | 2021027286 | A1 | 18 February 2021 |
| | | | | EP | 3805057 | A1 | 14 April 2021 |
| | | | | US | 2021269018 | A1 | 02 September 2021 |
| | | | | CN | 112440979 | B | 22 April 2022 |
| CN | 112849127 | A | 28 May 2021 | CN | 112849127 | B | 02 August 2022 |
| CN | 113085578 | A | 09 July 2021 | CN | 113085578 | B | 13 December 2022 |
| CN | 113401114 | A | 17 September 2021 | CN | 113401114 | B | 25 March 2022 |
| CN | 114771530 | A | 22 July 2022 | | None | | |
| CN | 112550430 | A | 26 March 2021 | CN | 112550430 | B | 23 September 2022 |
| JP | 2003291841 | A | 15 October 2003 | JP | 3987363 | B2 | 10 October 2007 |

Form PCT/ISA/210 (patent family annex) (July 2022)